# EUROPEAN PATENT SPECIFICATION

(11) **EP 1 881 100 B1**
(45) Date of publication and mention of the grant of the patent: **26.01.2011**
(21) Application number: 06014798.0
(22) Date of filing: 17.07.2006
(51) Int. Cl.: D06F 37/26

(54) **Bearing housing for a washing machine tub**
Lagergehäuse für einen Laugenbehälter einer Waschmaschine
Logement de palier pour une cuve de machine à laver

(43) Date of publication of application: 23.01.2008
(73) Proprietor: Aktiebolaget SKF, 415 50 Göteborg (SE)
(72) Inventor: Mola, Roberto, 10129 Torino (IT); Pairone, Gianfranco, 10141 Torino (IT); Gallucci, Francesco, 10042 Nichelino (TO) (IT)
(74) Representative: Fioravanti, Corrado

(56) References cited:
- EP-A2- 0 219 115
- EP-A2- 1 296 077
- EP-A2- 1 655 406
- WO-A-01/88415
- GB-A- 2 272 913

## Description

The present invention relates to a hose which may be co-moulded with the tub of a washing machine.

In general, hoses which may be co-moulded with the tubs of washing machines become an integral part of the tubs themselves in order to facilitate the operations relating to the assembly of the washing machines, and are defined by two rolling contact bearings which are arranged along a rotation axis of a drum of the washing machine, and by a spacer which is interposed between the two bearings in order to maintain the two bearings themselves at a determined axial distance from each other.

As described in European patent No. EP 0 219 115, the hose is produced by arranging a spacer made of plastic material and with outer axial dimensions which are equal to the above-mentioned determined distance inside a mould, then positioning the two bearings inside the mould in correspondence to the opposite ends of the spacer itself, and subsequently co-moulding a cylindrical containing sleeve around the three elements. Finally, the hose which has been formed in this way is then co-moulded with the tub of the washing machine.

It is obvious from the above description that it is necessary to manipulate the spacer and the two bearings independently from each other as well as to position the spacer and the two bearings in the mould independently from each other which not only renders the assembly cycle particularly laborious, but also heightens the possibility that errors in positioning might ensue with immediate repercussions for the useful working life of the hose or rather of the relative washing machine.

The aim of the present invention is to produce a co-mouldable hose with the tub of a washing machine, which will be both simple and cost-effective to produce, and which will also permit the achievement of high standards of quality.

According to the present invention a co-mouldable hose with the tub of a washing machine will be produced according to claim 1, the preamble of which is disclosed in document WO 01/88415.

As far as hoses of a well known kind are concerned, or rather those of the kind which are described in the above-mentioned European patent, it should be stressed that such hoses present the advantage of being able to produce the aforementioned cylindrical containing sleeve in plastic material which is of a higher quality than the plastic material which is used to produce the tub, or rather in a material which is more suitable for resisting the high level of mechanical stress which is transmitted from the drive shaft to the bearings.

Nevertheless, due to the fact that the performance levels of washing machines have improved considerably in recent years, and particularly with regard to the rotation speed of the drum, hoses which are produced according to the above description are no longer adequate.

Thus, a further aim of the present invention is to produce the above-specified hose in such a way that it presents a high level of resistance to mechanical stress, as well as being extremely versatile to use.

In order to fulfil this aim, the said tubular element in the above-defined hose is preferably made of metallic material.

Furthermore, the above-defined hose comprises a sleeve made of plastic material which is co-moulded radially outside the said assembly element.

The present invention will now be described with reference to the attached drawings, which illustrate a non-limiting form of embodiment of the present invention, in which:
- FIGURE 1 illustrates a perspective view of a first preferred form of embodiment of a hose which may be co-moulded to a washing machine tub and which is produced according to the present invention;
- FIGURE 2 is a section along the line II-II which is shown in FIGURE 1;
- FIGURE 3 illustrates, in section and in perspective view, a second preferred form of embodiment of the hose which is shown in FIGURE 1;
- FIGURE 4 illustrates, in section and in perspective view, a third preferred form of embodiment of the hose which is shown in FIGURE 1;
- FIGURE 5 illustrates, in section and in perspective view, a fourth preferred form of embodiment of the hose which is shown in FIGURE 1;
- FIGURE 6 illustrates, in section and in perspective view, a fifth preferred form of embodiment of the hose which is shown in FIGURE 1; and
- FIGURE 7 illustrates, in perspective view and on a reduced scale, a detail of the hose which is shown in FIGURE 6.

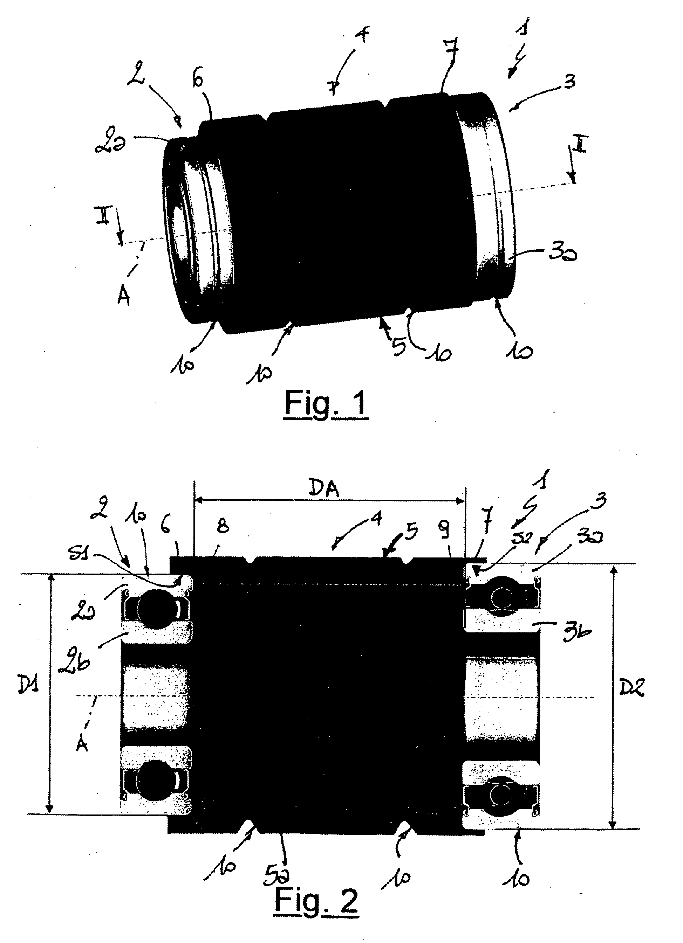

With reference to FIGURES 1 and 2, the number 1 indicates a hose which may be co-moulded to a washing machine tub in its entirety.

The hose 1 presents a longitudinal axis A, and comprises a tubular body 4, which extends along the axis A itself, and is axially delimited at its own respective opposite ends by two annular end borders 6 and 7 which are co-axial to the axis A. In addition, the hose 1 comprises two bearings, 2 and 3, which are preferably but not necessarily rolling bearings, which are arranged along the axis A, are partially housed inside the borders 6, and respectively, 7, and are arranged at a determined axial distance DA from each other.

The tubular body 4 and the two borders 6 and 7 form a single body which is made of plastic material, and also form, together with the two bearings 2 and 3 which are housed partially inside the borders 6 and 7, a single assembly element 5 which is suitable for being co-moulded with external plastic material, as will be explained better in the description which follows.

The bearings 2 and 3 present respective outer races 2a and 3a which have different outer diameters from each other in the same way as they also present respective inner races 2b and 3b which also have different diameters from each other.

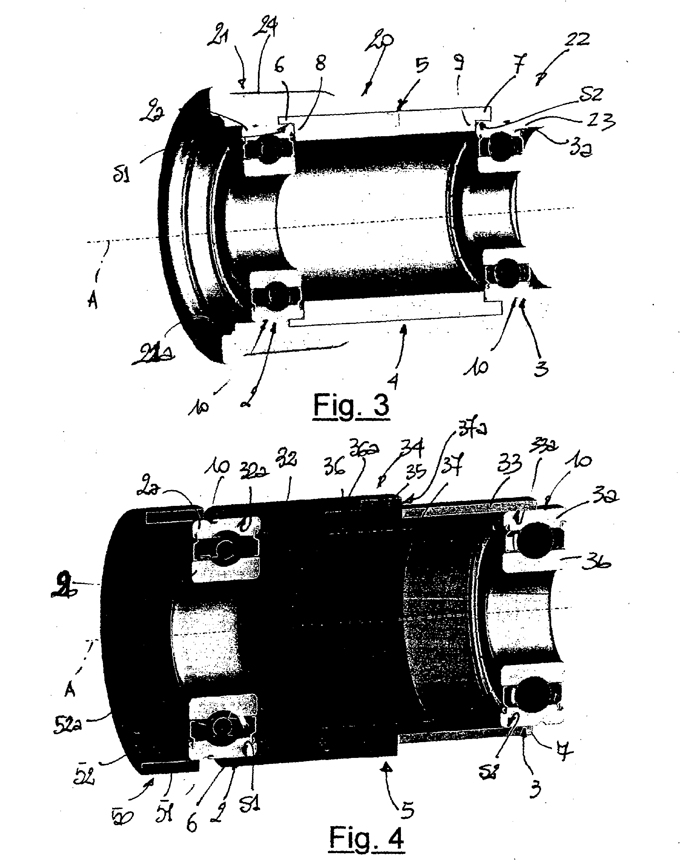

In the form of embodiment which is illustrated in FIGURES 2 and 3, the tubular body 4 comprises two shoulders 8 and 9, which are arranged at the distance DA from each other in order to longitudinally delimit towards the inside the borders 6, and respectively, 7, and define an inner cavity 5a with a diameter Di which is of constant dimensions for the whole of the length of the distance DA. The two borders 6 and 7 presenting respective inner diameters D1 and D2 which have different dimensions from each other and which have greater dimensions in comparison with the dimensions of the inner diameter Di of the cavity 5a in such a way as to form, with the shoulders 8 and 9, respective positioning housings S1 and S2, which house at least in part the bearings 2, and respectively, 3, and in which the bearings 2 and 3 are inserted in such a way as to abut the relative shoulders 8 and 9 in order to produce the assembly element 5.

According to a form of embodiment which is not illustrated and which is an alternative to the ones that have been just described above, the two borders 6 and 7 may present respective inner diameters D1 and D2 which have the same dimensions as each other, and which are, anyway, of greater dimensions than the dimensions of the inner diameter Di of the cavity 5a.

With the aim of increasing the seizing capacity of the above-described spacer-bearing ensemble by means of using outer plastic material, preferably with the use of the same plastic material as the washing machine tub, the hose 1 also comprises one or more eccentric grooves 10, which are radially open towards the outside of the hose 1 itself, and which each present a radial depth which is circumferentially variable.

In the form of embodiment which is illustrated in FIGURES 1 and 2, there are four grooves 10, of which the body 4 presents two, while the bearings 2 and 3 present one each obtained radially outside the respective outer races 2a and 3a and in such a way that they are not covered by the relative border 6 and, respectively, 7. The grooves 10 are suitable for being filled with the plastic material of which the washing machine tub is made during the co-moulding of the hose 1 with the tub itself.

Alternatively, according to preferred forms of embodiment which are not herein described, but which may be easily understood from the foregoing description, the grooves 10 may be obtained on only one of the bearings 2 and 3, or rather only on the outside of the body 4 in odd or even numbers according to the construction needs of the hose 1.

As an alternative to the grooves 10, or rather in addition to the same grooves 10 in the different variations which have been described above, seizing may be ensured if not actually increased by means of surface working of the body 4, such as, for example, knurling or embossing.

It is immediately obvious from the above description that, once the bearings 2 and 3 have been inserted inside the relative housings S1 and S2, they form, together with the body 4, the assembly element 5 rendering the movement and use of the hose 1 itself very simple and permitting it to be immediately co-moulded to a washing machine tub.

In addition, as the annular borders 6 and 7 may be produced with different inner diameters simply by varying the working parameters of the housings S1 and S2, it is also obvious that the hose 1 may be advantageously and easily used for bearings 2 and 3 which are characterised by having different dimensions from each other.

The hose 1, in order to increase its versatility in terms of use, may also comprise a sleeve 20 which is made of plastic material and which is produced by means of co-moulding with the element 5, as is alternatively illustrated in FIGURE 3.

According to the present invention (FIGURE 3), the sleeve 20, the plastic material of which fills the grooves 10, comprises two annular lips 21 and 22, of which the lip 21 projects axially outside the bearing 2 presenting an inner diameter which is equal to an outer diameter of the bearing 2 itself, while the lip 22 projects axially outside the bearing 3, but presents a shoulder 23 opposite the shoulder 9 in relation to the race 3a in order to axially block the bearing 3 from the external part as well.

Alternatively, the lip 21 may also present a shoulder which is similar to the shoulder 23 and which is opposite the shoulder 8 in order to axially block the bearing 2 from both sides.

In addition, the sleeve 20 is provided with a series of outer axial ribs 24 which are suitable for conferring a determined axial rigidity to the sleeve 20 itself, as well as for increasing the seizing capacity of the sleeve 20 when it is co-moulded with a washing machine tub.

On the premise that the plastic sleeve 20 may assume a wide variety of shapes at the planning stage, in the form of embodiment which is illustrated in FIGURE 3, while a side of the lip 22 presents a regular and substantially tubular shape, on the other side, the lip 21 presents, instead, a shape which is substantially conical and open towards the outside and is provided with at least an inner profile 21a which is suitable for permitting the anchoring of external elements to the hose 1, for example, sealing device, in particular of the contacting type, control sensors and similar.

In the two above-described forms of embodiment with reference to FIGURES 1, 2 and 3, the hose 1 presents the characteristic of having the body 4 and the two borders 6 and 7 forming part of a single piece of metallic material in which, preferably, but not necessarily, the borders 6 and 7 are produced by the turning of the relative opposite ends of the body 4.

According to what is alternatively illustrated in FIGURE 4, the body 4 may also be advantageously produced in separate pieces which may be fitted to each other. In particular, the body 4 which is illustrated in FIGURE 4 comprises two metallic tubes 32. and 33 for housing the bearings 2, and respectively, 3, and a metallic connecting insert 34 between the two tubes 32 and 33.

The metallic insert 34 presents a central axial portion 35 with a diameter which is greater than the diameter of the tubes 32 and 33, and two lateral portions 36 and 37, which depart from the portion 35 in opposite axial directions from each other, and present respective outer diameters of dimensions which are substantially equal to the inner diameters of the tubes 32, and respectively 33 in order to form with the portion 35 two counter surfaces 35a and 37a which are transverse to the axis A.

Each tube 32 and 33 presents, from the part opposite that which is shrink fit onto the insert 34, a relative border 6, and respectively 7, in which is mounted a relative bearing 2, and respectively 3.

During the assembly phase, the tubes 32 and 33 are shrink fit onto the portions 36 and 37 and are axially arranged in such a way as to abut the surfaces 36a and 37a. Then each bearing 2 and 3 is inserted into the relative border 6 and 7 as far as a determined axial depth that is such as to respect the distance DA between the two bearings 2 and 3.

The possibility of having a body 4 in more than one piece which has just been described renders the use of the hose 1 according to the present invention even more flexible and wide-ranging.

Although not illustrated in FIGURE 4, the grooves 10 may also be obtained on the tubes 32 and 33 or on the metallic insert 35.

In addition, and still in accordance with the illustration which is shown in FIGURE 4,the hose 1 may comprise, preferably but not necessarily, a sealing element 50 which is mounted axially outside the bearing 2, and comprising a metallic race 51 which is shrink fit onto the race 2a and an annular lining 52 made of rubber material. The annular lining 52 is arranged against the bearing 2 and is pre-greased in order to increase its working life. More particularly, the annular lining 52 is provided with a film of lubricant material which is placed all along its inner cylindrical surface 52a prior to the assembly of the hose 1 with the tub and prevents the wear of the annular lining 52 itself.

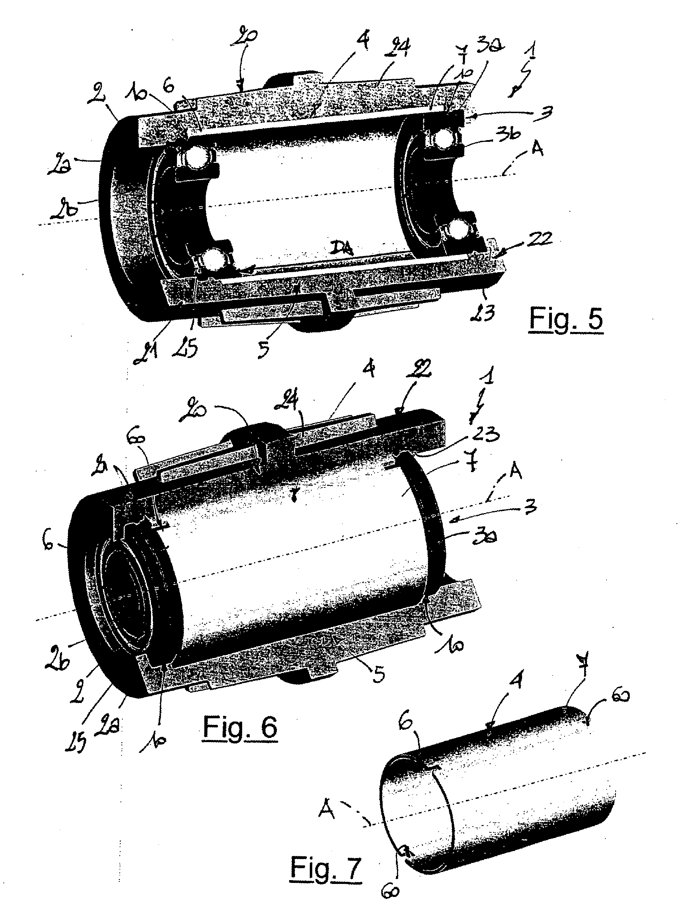

In the alternative form of embodiment of the hose 1 which is shown in FIGURE 5, the tubular body 4 and the two borders 6 and 7 form a single body made of metallic material and presenting a single inner diameter Di, and the borders 21 and 22 of the sleeve 20 are both provided with respective shoulders 25 and 23 in order to axially block towards the outside the race 2a, and respectively, 3a of the bearings 2 and 3.

In particular, in this form of embodiment, the races 2a and 3a present an outer diameter of equal dimensions, and the race 3a presents an increased radial thickness in such a way as to be able to be mounted inside the relative border 7 without the addition of any thickness or other element whatsoever.

Even if it is not shown in Fig.5, the hose 1 is also provided with an annular lining 52 which place inside the border 21 and against the bearing 2.

Finally, in the form of embodiment of the hose 1 which is shown in FIGURES 6 e 7, each border 6 and 7 presents one or more longitudinal notches 60, which permit the mounting of the bearings 2 and 3 without any excessive prevarication of the bearings 2 and 3 themselves, and, at the same time, further increase the seizing capacity of the co-moulded plastic material, whether in terms of the sleeve 20, or in terms of the plastic material of the washing machine tub which can be filled with the plastic material itself, and also function as anti-rotation elements.

The notches 60 are axially open towards the outside of the relative borders 6 and 7, and are uniformly distributed for each border 6 and 7 around the axis A. In addition, the notches 60 extend axially inside the relative borders 6 and 7 as far as a determined longitudinal depth which is substantially equal to the axial depth at which are arranged the bearing 2, and respectively 3.

The hose 1 which is described in FIGURES 4, 5 and 6, like those which were previously and alternatively described in FIGURES 1, 2 and 3, is ready to be directly co-moulded with a washing machine tub, or, alternatively, may be equipped with a sleeve which is made of plastic material and which is arranged outside the body 4 as was described for the hose 1 which is shown in FIGURES 3, 5 and 6.

## Claims

1. Co-moldable hose (1) with a washing machine tub presenting a longitudinal axis (A) and comprising:
- a tubular element (4) which extends along the longitudinal axis (A) and presenting two annular end borders (6, 7) which are co-axial to the longitudinal axis (A) itself;
- two bearings (2, 3) which are each housed at least partially inside a respective annular border at a determined axial distance (DA) from each other in order to form a single assembly element (5) with the said tubular element (4);
- seizing means (10) for the seizing of the assembly means (5) with plastic material which is co-moulded with the assembly element (5) itself; and
- a sleeve (20) made of plastic material which is co-moulded radially to the outside of said assembly element (5);
**characterised in that** the sleeve (20) comprises two annular lips (21,22), of which the annular lip (21) projects axially outside the bearing (2) and presents an inner diameter which is equal to an outer diameter of the bearing (2) itself, while the annular lip (22) projects axially outside the bearing (3), but presents a shoulder (23) opposite a shoulder (9) in relation to the race (3a) of bearing (3) in order to axially block said bearing (3) from the external part as well.

2. Hose according to claim 1, **characterised by** the fact that also the annular lip (21) presents a shoulder (25) opposite a shoulder (8) in order to axially block the bearing (2) from both sides.

3. Hose according to Claim 1, **characterised by** the fact that the said tubular element (4) is made of metallic material.

4. Hose according to Claim 3, **characterised by** the fact that the said seizing means comprise at least one eccentric groove (10) which is obtained radially outside the said assembly element (5).

5. Hose according to Claim 4, **characterised by** the fact that the said at least one eccentric groove (10) is obtained radially outside at least one of the bearings (2, 3) of the said two bearings (2, 3).

6. Hose according to Claims 3, 4, or 5, **characterised by** the fact that the said seizing means (10) comprise at least one further eccentric groove (10) which is radially open towards the outside and which is obtained externally to the said tubular element (4).

7. Hose according to any of the Claims from 3 to 6, **characterised by** the fact that the said annular borders (6, 7) each present a respective number of longitudinal notches (60).

8. Hose according to any of the Claims from 3 to 6, **characterised by** the fact that the said annular borders (6, 7) are longitudinally limited towards the inside of the said tubular element (4) by respective shoulders/abutments (8, 9) which are arranged at the said axial distance (DA) from each other.

9. Hose according to Claims 7 or 8, **characterised by** the fact that the said tubular element (4) is made of a single piece of metallic material.

10. Hose according to Claims 7 or 8, **characterised by** the fact that the said tubular element comprises a tubular metallic portion (32, 33) for each bearing (2, 3) and a metallic connection insert (34) between one tubular portion (32, 33) and the other; each bearing (2, 3) being inserted partially inside the relative tubular portion (32, 32).

11. Hose according to any of the preceding Claims, **characterised by** the fact of comprising a sealing device (52) which is arranged against a bearing (2) (3) and it is pre-greased in order to increase its working life.

12. Hose according to Claim 11, **characterised by** the fact that the sealing device (52) is made of rubber material and it is provided with a film of lubricant material which is placed all along a contacting portion (52a) of the sealing device (52) itself.

## Patentansprüche

1. Mit einem Waschmaschinenbehälter mitabformbarer Schlauch (1), der eine Längsachse (A) aufweist und Folgendes umfasst:
- ein rohrförmiges Element (4), das sich entlang der Längsachse (A) erstreckt und zwei ringförmige Endränder (6, 7) aufweist, die koaxial zu der Längsachse (A) selbst verlaufen;
- zwei Lager (2, 3), die jeweils zumindest teilweise innerhalb eines jeweils ringförmigen Randes in einem bestimmten Axialabstand (DA) voneinander untergebracht sind, um ein einzelnes Montageelement (5) mit dem rohrförmigen Element (4) zu bilden;
- Greifeinrichtungen (10) zum Ergreifen der Montageeinrichtung (5) mit Kunststoffmaterial, das mit dem Montageelement (5) selbst mitabgeformt ist; und
- eine Hülse (20), die aus Kunststoffmaterial hergestellt ist, das radial mit der Außenseite des Montageelementes (5) mitabgeformt ist;
**dadurch gekennzeichnet, dass** die Hülse (20) zwei ringförmige Lippen (21, 22) aufweist, von denen die ringförmige Lippe (21) axial aus dem Lager (2) hervorsteht und einen Innendurchmesser aufweist, der gleich einem Außendurchmesser des Lagers (2) selbst ist, während die ringförmige Lippe (22) axial aus dem Lager (3) hervorsteht, jedoch einen Ansatz (23) gegenüber einem Ansatz (9) bezüglich des Laufrings (3a) des Lagers (3) aufweist, um das Lager (3) axial auch von dem äußeren Teil zu blockieren.

2. Schlauch nach Anspruch 1, **dadurch gekennzeichnet, dass** auch die ringförmige Lippe (21) einen Ansatz (25) gegenüber einem Ansatz (8) aufweist, um das Lager (2) axial von beiden Seiten zu blockieren.

3. Schlauch nach Anspruch 1, **dadurch gekennzeichnet, dass** das rohrförmige Element (4) aus metallischem Material hergestellt ist.

4. Schlauch nach Anspruch 3, **gekennzeichnet durch** die Tatsache, dass die Greifeinrichtungen mindestens eine exzentrische Nut (10) umfassen, die radial außerhalb des Montageelementes (5) erhalten wird.

5. Schlauch nach Anspruch 4, **dadurch gekennzeichnet, dass** die mindestens eine exzentrische Nut (10) radial außerhalb von mindestens einem der Lager (2, 3) der zwei Lager (2, 3) erhalten wird.

6. Schlauch nach den Ansprüchen 3, 4 oder 5, **dadurch gekennzeichnet, dass** die Greifeinrichtungen (10) mindestens eine weitere exzentrische Nut (10) umfassen, die radial nach außen mündet, und die außerhalb des rohrförmigen Elementes (4) erhalten wird.

7. Schlauch nach einem der Ansprüche 3 bis 6, **dadurch gekennzeichnet, dass** die ringförmigen Ränder (6, 7) jeweils eine jeweilige Anzahl von Längskerben (60) aufweisen.

8. Schlauch nach einem der Ansprüche 3 bis 6, **dadurch gekennzeichnet, dass** die ringförmigen Ränder (6, 7) in Längsrichtung in Richtung der Innenseite des rohrförmigen Elementes (4) jeweils durch Ansätze/Anschläge (8, 9) begrenzt sind, die in dem Axialabstand (DA) voneinander angeordnet sind.

9. Schlauch nach Anspruch 7 oder 8, **dadurch gekennzeichnet, dass** das rohrförmige Element (4) aus einem einstückigen metallischen Material hergestellt ist.

10. Schlauch nach den Ansprüchen 7 oder 8, **dadurch gekennzeichnet, dass** das rohrförmige Element einen rohrförmigen metallischen Abschnitt (32, 33) für jedes Lager (2, 3) und einen metallischen Verbindungseinsatz (34) zwischen einem rohrförmigen Abschnitt (32, 33) und dem anderen aufweist; wobei jedes Lager (2, 3) teilweise in den relativen rohrförmigen Abschnitt (32, 33) eingesetzt ist.

11. Schlauch nach einem der vorangehenden Ansprüche, **dadurch gekennzeichnet, dass** er eine Dichtungsvorrichtung (52) aufweist, die gegen ein Lager (2) (3) angeordnet und vorgeschmiert ist, um seine Betriebslebensdauer zu erhöhen.

12. Schlauch nach Anspruch 11, **dadurch gekennzeichnet, dass** die Dichtungsvorrichtung (52) aus Gummimaterial hergestellt und mit einem Film aus Schmiermaterial versehen ist, das über die gesamte Länge eines Berührungsabschnittes (52a) der Dichtungsvorrichtung (52) selbst positioniert ist.

## Revendications

1. Tuyau pouvant être moulé (1) conjointement avec une cuve de machine à laver présentant un axe longitudinal (A) et comprenant :
- un élément tubulaire (4) qui s'étend le long de l'axe longitudinal (A) et présentant deux bordures d'extrémité annulaires (6, 7) qui sont disposées co-axialement par rapport à l'axe longitudinal (A) lui-même ;
- deux paliers (2, 3) qui sont chacun logés au moins en partie à l'intérieur d'une bordure annulaire respective à une distance axiale déterminée (DA) l'un de l'autre afin de former un élément d'assemblage unique (5) avec ledit élément tubulaire (4) ;
- des moyens de grippage (10) pour gripper le moyen d'assemblage (5) avec un matériau plastique qui est moulé conjointement avec l'élément d'assemblage (5) lui-même ; et
- un manchon (20) fabriqué en matériau plastique, qui est moulé conjointement radialement à l'extérieur dudit élément d'assemblage (5) ;
**caractérisé en ce que** le manchon (20) comprend deux lèvres annulaires (21, 22) parmi lesquelles la lèvre annulaire (21) fait saillie axialement à l'extérieur du palier (2) et présente un diamètre intérieur qui est égal à un diamètre extérieur du palier (2) lui-même, tandis que la lèvre annulaire (22) fait saillie axialement à l'extérieur du palier (3), mais présente un épaulement (23) opposé à un épaulement (9) par rapport au chemin de roulement (3a) du palier (3) afin de bloquer axialement ledit palier (3) depuis la partie extérieure également.

2. Tuyau selon la revendication 1, **caractérisé en ce que** la lèvre annulaire (21) présente également un épaulement (25) opposé à un épaulement (8), afin de bloquer axialement le palier (2) des deux côtés.

3. Tuyau selon la revendication 1, **caractérisé en ce que** ledit élément tubulaire (4) est fabriqué en matériau métallique.

4. Tuyau selon la revendication 3, **caractérisé en ce que** lesdits moyens de grippage comprennent au moins une gorge excentrique (10) qui est réalisée radialement à l'extérieur dudit élément d'assemblage (5).

5. Tuyau selon la revendication 4, **caractérisé en ce que** ladite au moins une gorge excentrique (10) est réalisée radialement à l'extérieur d'au moins l'un des paliers (2, 3) parmi lesdits deux paliers (2, 3).

6. Tuyau selon les revendications 3, 4 ou 5, **caractérisé en ce que** lesdits moyens de grippage (10) comprennent au moins une gorge excentrique supplémentaire (10) qui est ouverte radialement vers l'extérieur et qui est réalisée à l'extérieur dudit élément tubulaire (4).

7. Tuyau selon l'une quelconque des revendications 3 à 6, **caractérisé en ce que** lesdites bordures annulaires (6, 7) présentent chacune un nombre respectif d'encoches longitudinales (60).

8. Tuyau selon l'une quelconque des revendications 3 à 6, **caractérisé en ce que** lesdites bordures annulaires (6,7) sont limitées longitudinalement vers l'intérieur dudit élément tubulaire (4) par des épaulements/aboutements (8, 9) respectifs qui sont agencés à ladite distance axiale (DA) les uns des autres.

9. Tuyau selon les revendications 7 ou 8, **caractérisé en ce que** ledit élément tubulaire (4) est fabriqué en un matériau métallique d'une seule pièce.

10. Tuyau selon les revendications 7 ou 8, **caractérisé en ce que** ledit élément tubulaire comprend une portion métallique tubulaire (32, 33) pour chaque palier (2, 3) et un insert de connexion métallique (34) entre une portion tubulaire (32, 33) et l'autre ; chaque palier (2, 3) étant inséré partiellement à l'intérieur de la portion tubulaire respective (32, 33).

11. Tuyau selon l'une quelconque des revendications précédentes, **caractérisé en ce qu'**il comprend un dispositif d'étanchéité (52) qui est agencé contre un palier (2, 3) et qui est pré-graissé afin d'augmenter sa durée de vie.

12. Tuyau selon la revendication 11, **caractérisé en ce que** le dispositif d'étanchéité (52) est fabriqué en matériau en caoutchouc et est pourvu d'un film de matériau lubrifiant qui est placé tout le long d'une portion de contact (52a) du dispositif d'étanchéité (52) lui-même.
